# EUROPEAN PATENT SPECIFICATION

(11) **EP 0 593 224 B1**
(45) Date of publication and mention of the grant of the patent: **21.04.1999**
(21) Application number: 93308023.6
(22) Date of filing: 08.10.1993
(51) Int. Cl.: A61J 1/00, B29C 49/76

(54) **Container and withdrawal element permitting total withdrawal of contents**
Behälter mit Entnahmeelement für eine vollständige Inhaltsentnahme
Container et dispositif d'évacuation permettant une évacuation totale du contenu

(30) Priority: 13.10.1992 US 959740
(43) Date of publication of application: 20.04.1994
(60) Divisional application: 98118535.8
(73) Proprietor: AUTOMATIC LIQUID PACKAGING, INC., Woodstock Illinois 60098 (US)
(72) Inventor: Weiler, Gerhard H., Woodstock, Illinois 60098 (US)
(74) Representative: Allard, Susan Joyce

(56) References cited:
- EP-A- 0 083 778
- EP-A- 0 469 905
- EP-A- 0 490 638
- WO-A-85/04097
- DE-A- 2 502 145
- US-A- 4 143 453
- US-A- 4 540 542
- US-A- 4 643 309
- US-A- 4 865 777

## Description

This invention relates to sealed containers usually for sterile storing and dispensing of fluids. The size of the container can vary from 0.4 millilitres to 500 millilitres or more. The containers may contain an injectable serum, intravenous fluids, fluid for use in diagnostics and other fluids. The method relates to the sealed withdrawal of fluids from the containers.

U.S. Patents Nos. 4,643,309, 4,540,542, 4,239,726 and 4,298,045 all relate to withdrawing a fluid from a container. Invariably, the containers shown in US-A-4,643,309 accept a syringe tapered conical end engaged by a tapered female recess in the neck of a vessel or phial, and the two are related by a friction fit of zero tolerance as to the tapered angle of each, most normally being approximately 2°. With the larger containers as shown in US-A-4,239,726 and 4,298,045, a tapered spike withdraws the fluid from a tapered conical opening.

The disadvantage of such tapered inserts are numerous. First, the fit is along a frustoconical surface such as the upper two-thirds of a cone which fits into a container which is comparable to the upper two-thirds of another cone. Second, the fit is frictional and not interference which could permit leakage. Third, the inserts are of varying lengths and extend into the container beyond the neck and hence cannot achieve maximum or effective total withdrawal. The fit is, therefore, frictional and that of a repository as distinguished from lockingly engaged by a predetermined interference seal. In addition, with the type of a phial as illustrated in US-A-4,643,309 there is no provision for determining accurately the depth to which the insert is inserted into the container. If the insertion is not predetermined, the extent of the insertion may be longer or shorter than that desired. Also, when inverted, leakage can occur. If the tip of the withdrawal insert penetrates the container beyond its neck, some fluid may be trapped and cannot be withdrawn.

EP-A-0469905 relates to a liquid container for injecting chemicals into a human or animal body.

EP-A-0490638 relates to a leak resistant connection between tubular members in a fluid transport system.

W0 85/04097 relates to an appliance for the preparation of injectable medicaments.

Therefore, what is desired is a container which is formed to accept a withdrawal insert which will guide the same into position and secure it with a tight seal which will overcome leaks attributable to scratches that may occur in the manufacturing process or in the insertion process. The structure should also ensure that the withdrawal member is inserted to a given position so that in withdrawing the solution effectively the entirety of the contents will be withdrawn. In addition, the above should be achieved through a manufacturing process in which conventional blow moulding and/or blow/fill seal equipment is employed.

Accordingly, the present invention provides a container for containing a sealed solution and a withdrawal element for withdrawing the said solution from the container, the container having a body, one end with a removable seal, and a neck, wherein the neck has an inner aperture of substantially uniform cross-section from one end of the neck to the other, and there being a removable tear tab beyond the neck portion, characterised in that an internal collar is provided for receiving the withdrawal element in interference fit relationship, the withdrawal element being in the form of a tube having a neck insert and an annular groove on the neck insert proportioned for a force fit with the internal collar of the container, and wherein an internal seating ring is provided at the end of the neck remote from its open portion to sealingly engage the end of the withdrawal element to thereby ensure full withdrawal of the sealed solution after the internal collar secures the withdrawal element against the internal seating ring.

The container may be formed by forming a mandrel for insertion into a parison which has been partially blown having an upper neck portion in which a stop is provided above the base of the neck, forming a friction fit ring from a recess in the mandrel, and proportioning a radius and draft angle which permit the mandrel to be withdrawn from the thus-formed product without damaging the ring and stop but after they have been sufficiently formed to permit the withdrawal of the mandrel.

The present invention also provides a method of withdrawing fluid from a container in conjunction with a withdrawal element as herein described, characterised by the steps of inserting the withdrawal element into the container by force fittingly advancing it until the end contacts the internal seating ring of the container, and thereafter at least partially inverting the container to a point where the entire contents of the container will flow to the neck portion of the container, and withdrawing the fluid until no further fluid is left to withdraw.

Preferably, the withdrawal element has an outwardly extending control ring at an intermediate portion thereof and a tube insert, the tube insert and neck insert being on respective sides of the control ring and having a common bore.

Preferably, the internal collar has an interference tolerance of at least 0.0254 mm (.001") per side at a pre-selected portion between end portions of the neck for receiving the withdrawal element in interference fit.

For a better understanding of the invention, and to show how the same may be carried into effect, reference will now be made, by way of example, to the accompanying drawings, in which:-
Figure 1 is a front view of a typical intravenous solution dispenser;
Figure 2 is an enlarged cross-sectional view of a neck portion of a withdrawal element of the container shown in Figure 1;
Figure 3 is an enlarged cross-sectional view of a plug and tube used to insert into the container neck of Figure 2;
Figure 4 is a transverse sectional view taken along line 4-4 of Figure 2 and showing an alternative embodiment in which a flat is employed in order to orientate the insert; and
Figure 5 is another transverse sectional view showing the container neck, but used in conjunction with a conical Luer tip made in accordance with American National Standard NC/HIMA MD 70.1-1983.

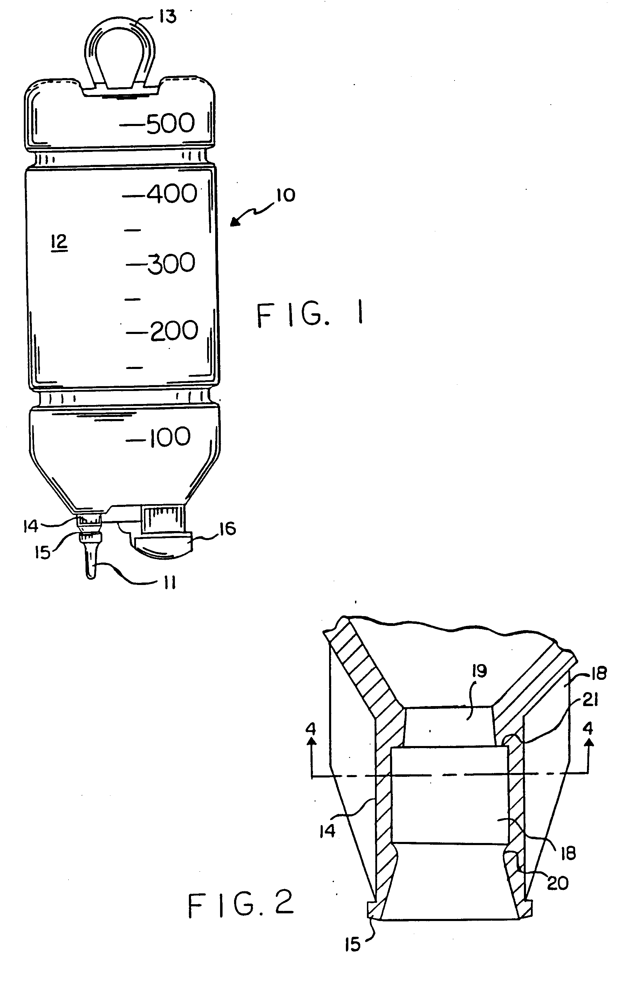

The first embodiment is shown in conjunction with a container 10 as it appears in Figure 1. The container 10 is provided with a seal tab 11, a body portion 12 and a hanger 13. The seal tab 11 is secured to a body neck 14 by means of a frangible web 15. In opening, the seal tab is torn away from the neck 14 when the frangible web 15 is broken.

The container 10 is hermetically sealed and normally has a plurality of removable closures 11, 16 for containing and dispensing sterile solutions. The removable closures 11, 16 are integral with the container 10, which comprises a sealed elongate shell or body 12 of a thermoplastic material which has at least one access port at each end of the shell, a neck integral with the shell and surrounding each access port and a removable cap structure over the access ports. These constitute e.g. the closures 11, 16 and the frangible annular webs 15, which are integral e.g. with the removable cap 11 and neck 14. At least one of the neck portions is provided with a bore of predetermined controlled dimensions and is adapted to receive a draining spike or a similar means for withdrawing the contents of the container. In the embodiment shown in Figure 1, I.D. control port 14 is provided and is made accessible by removing the cap 11 when the frangible web 15 is broken.

Figure 2 shows that the neck 14 terminates at the frangible web 15 at its lower portion and a reinforcing web 18 is provided to strengthen the neck 14 where it joins the body 12 of the container 10. An interference collar 20 and a seating ring 21 are provided inside the neck.

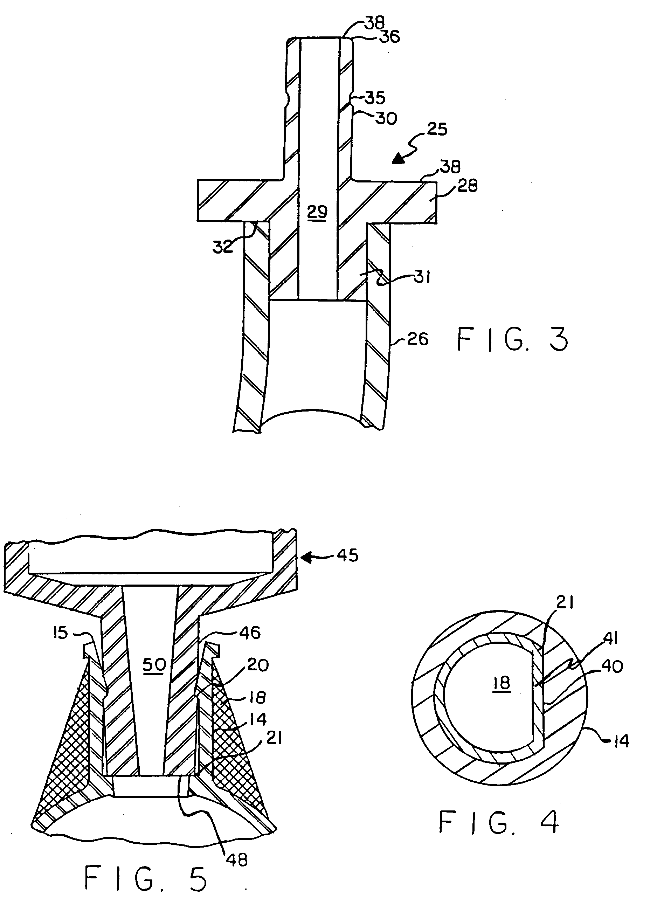

In order to withdraw fluid through the initial opening aperture 19, a plug 25, as shown in Figure 3, is employed. The plug 25 is secured to a withdrawal tube 26 which is press-fitted over the plug tube insert 31 and the tube 26 abuts the tube in seat 32 on the control ring 28. The neck insert 30 has an upper surface 38 which is a seating ring face. It engages the portion of the neck 14 from which the frangible web 15 (see Figure 2) has been removed. The plug 25 is provided with an aperture 29 which traverses the control ring 28. An annular groove 35 is provided around the neck insert 30 to receive and nest as an interference fit the interference collar 20 of the neck 14 shown in Figure 2. The neck insert end 36 of the plug 25 has a sealing ring face 38 which is snugly positioned, when inserted, against the seating ring 21 of the neck 14.

A modification as shown in Figure 4 is available if it is desired to orientate the insert into the neck 14 of the container 10. There it will be seen that this orientation is provided by means of an internal flat 40 on the neck which engages a flat 41 on the insert.

The flexibility and adaptability of the construction is illustrated in Figure 5, where the container may be smaller than container 10 of Figure 1, such as 0.4 millilitres or larger. It is utilised with a Luer slip fitting 45 such as identified in American national Standard and C/HIMA MD 70.1-1983. The Luer slip fitting 45 is provided with a Luer conical tip 46 and has a Luer tip end 48. Upon inserting the Luer conical tip 46 into the neck 14 an interference is occasioned by the dimensional provisions for the collar 20. Once the tip 46 is fully inserted to where the end of the tip 46 sits on top of the seating ring 21, it is ready to withdraw the fluid from the container 10.

When withdrawal does take place, the container can be held horizontally, but ultimately tipped upwards towards the vertical to the end that all of the contents will flow into the aperture 50 of the conical Luer tip 46. At the same time, not only is full withdrawal assured, but sealing between the container and the Luer slip fitting 45 is ensured at two portions, firstly where the end 48 of the Luer tip seats on the seating ring 21, and secondly where the interference fit is provided by the circumferential locking between the interference collar 20 and the Luer conical tip 46.

While dimensions do not necessarily form a part of the invention, they do illustrate the problems surrounded by the invention and how they were solved, and also the various proportions. The dimensions are not intended to be limiting, but rather exemplary of certain commercial adaptations. The dimensions also form a frame of reference for gauging proportions. The commercial type container 10 shown in Figure 1 has a 500 millilitre capacity. The dimension from the median portion of the interference collar 20 to the seating ring 21 is 4 millimetres (0.15 inches). It will be seen that the interior narrow dimension of the interference collar 20 is 3.962 millimetres (0.156").

Turning now to the dimensions of the plug 25, the neck insert is 4.293 millimetres (0.169") and the depth of the neck 35 gives it a diameter of 4.039 millimetres (0.159") thus insuring an interference fit of 0.077 millimetres. The distance from the ring seat face 38 of the neck insert 30 to the centre of the neck 35 is identical with the counterpart dimension in the neck 14 of the container 10. The plug 25 diameter can be readily increased to twice or more the dimension set forth.

Turning now to Figure 5, the dimensions of the distance between the interference collar 20 and the seating ring 21 are identical to that shown in the embodiment of Figure 2, with the exception that the overall distance from the seating ring 21 to the frangible web end portion 15 of the neck 14 is 6.350 millimetres (0,250"). It will also be appreciated that the dimensions are in part controlled by the ANSI standard for the Luer slip fitting ANSI/NIMAND70.11983.

The constriction portion of the sealing collar 20 is 3.962 millimetres (0.156"), the same as with the embodiment of Figure 2, providing for a snug interference fit. Where the conical Luer tip end 48 seats upon the seating ring 21, the outside diameter of the Luer tip end 48 is 4.027 millimetres (0.1585") whereas the interior diameter of the seating ring 21 is 4.293 millimetres (0.169") thus providing for a gap of .166 millimetres to ensure that the conical tip engages only the interference collar 20 end not the balance of the conical surface of the conical Luer tip 46. This ensures a very tight interference fit between the interference fit collar 20, and the conical Luer tip 46. Also, when the end 48 of the conical Luer tip 46 is seated on the seating ring 21, the collar not only provides a second seal, but also a dimensional "jig" whereby the Luer tip end 48 is held snugly and vice-like against the seating ring 21 in further fluid sealed engagement.

In operation, the embodiment of Figure 5 is comparable to that of Figures 1-3 in that the insert is positioned inside the neck until its end is secured against the seating ring 21. Thereafter, the contents are withdrawn, and towards the end of the withdrawal, the container is held horizontally or inverted if need be in order to accomplish full withdrawal of the contained solution. After full withdrawal, the insert is removed.

A method of forming the container 10 is disclosed and described in applicants' earlier U.S. Patent No. 4,239,726, more specifically as illustrated in Figures 7-10 thereof. While the same method is employed in forming the container and the neck, it is modified to the extent that a mandrel which is used is formed so that its cross-section is the same as the aperture 18 but recessed in order to form the interference collar 20. Also the lower end of the mandrel is dimensioned to form the seating ring 21. The same are proportioned to permit the mandrel, despite its interfering fit with the neck 14, to withdraw from the aperture 18 without disturbing the configuration of the already-formed interference collar 20 and the seating rings 21.

In the use of the container 10, 10' the seal tab 11, which is common to both constructions shown, is removed and thereafter the plug 25 which is used with a tube 26 is inserted or Luer tip cone 46 of a syringe. With both the plug 25 or 45, the Luer tip 48 inserted and pressed into position to a point where their respective ends and the seat engaging ends bottom out of the seating ring 21. This step is important because once the relationship between the end of the withdrawal instrument and the seating ring is established as to physical contact, when the container is inverted the entire contents have no other place to go than into syringe or the plug or tube. This ensures effective total withdrawal of the fluid while at the same time employing an absolute interference fit seal around the body portion of the withdrawal instrument. A further and related aspect of construction as shown in Figure 4 relates to the positioning a flat or otherwise providing for an asymmetrical withdrawal instrument so that positive orientation may be made of the withdrawal instrument.

Thus, by providing a neck of a container with a non-tapered cylindrical upper drain portion and a frictional interference fit collar type gripper for the withdrawal member, this results in tight interference fit. Also total effective withdrawal of the contents of the container is promoted by providing a ring like stop or seat at the bottom of the neck. In essence, a double seal is achieved with the further advantage of total withdrawal of the contained fluid. The construction also will accommodate flaws and defects in the manufacture of the withdrawal member or the drain portion resulting from scratches which will otherwise permit leakage upon withdrawal of the contents.

It will be appreciated that the container is made by a method by which the mandrel for insertion in the neck has a lower end portion providing a seating ring, and an upper portion defining the interior portion, with an interference collar protruding inwardly in a portion spaced from the lower end portion. The radius and draft angle permits the mandrel to be withdrawn from the moulded plastics product without deforming or damaging the same, but only after the neck of the container including an internal interference fit collar and ring seat have been shaped.

## Claims

1. A container for containing a sealed solution and a withdrawal element for withdrawing the said solution from the container, the container (10) having a body (12), one end with a removable seal (11), and a neck (14), wherein the neck has an inner aperture of substantially uniform cross-section from one end of the neck to the other, and there being a removable tear tab (11) beyond the neck portion, characterised in that an internal collar (20) is provided for receiving the withdrawal element (25, 45) in interference fit relationship, the withdrawal element being in the form of a tube (25, 45) having a neck insert (30, 46) and an annular groove (35) on the neck insert (30, 46) proportioned for a force fit with the internal collar (20) of the container, and wherein an internal seating ring (21) is provided at the end of the neck (14) remote from its open portion to sealingly engage the end (38, 48) of the withdrawal element to thereby ensure full withdrawal of the sealed solution after the internal collar secures the withdrawal element against the internal seating ring.

2. A container and withdrawal element according to claim 1, wherein the withdrawal element (25) has an outwardly extending control ring (28) at an intermediate portion thereof and a tube insert (31), the tube insert (31) and neck insert (30) being on respective sides of the control ring (28) and having a common bore (29).

3. A container and withdrawal element according to claim 1 or claim 2, wherein the internal collar (20) has an interference tolerance of at least 0.0254 mm (0.001") per side at a preselected portion between end portions of the neck (14) for receiving the withdrawal element (25, 46) in interference fit.

4. A container and withdrawal element according to any one of the preceding claims, wherein the container (10) contains injectable serum, intravenous fluids or diagnostic fluids.

5. A method of withdrawing fluid from a container in conjunction with a withdrawal element according to any one of the preceding claims, characterised by the steps of inserting the withdrawal element (25, 46) into the container (10) by force fittingly advancing it until the end (38, 48) contacts the internal seating ring (21) of the container, and thereafter at least partially inverting the container to a point where the entire contents of the container will flow to the neck portion (14) of the container, and withdrawing the fluid until no further fluid is left to withdraw.

## Patentansprüche

1. Behälter zur Aufnahme einer abgedichteten Lösung und Abziehelement zum Abziehen dieser Lösung aus dem Behälter, wobei der Behälter (10) einen Hauptteil (12), ein Ende mit einem abnehmbaren Verschluß (11) und einen Hals (14) aufweist, der Hals eine innere Öffnung mit im wesentlichen gleichförmigem Querschnitt von einem Ende des Halses bis zum anderen aufweist und ein abnehmbarer Reißstreifen (11) über dem Halsteil vorgesehen ist, dadurch gekennzeichnet, daß ein innerer Ring (20) zur Aufnahme des Abziehelements (25,45) mit gegenseitigem Preßsitz (interference fit) vorgesehen ist, das Abziehelement die Form eines Rohrs (25,45) mit einem Halseinsatz (30,46) und einer Ringnut (35) am Halseinsatz (30,46) besitzt, die so bemessen ist, daß sich ein kraftschlüssiger Sitz mit dem inneren Ring (20) des Behälters ergibt, und daß ein innerer Sitzring (21) an dem von seinem offenen Abschnitt entfernten Ende des Halses (14) vorgesehen ist, um dichtend am Ende (38,48) des Abziehelements anzugreifen und dadurch ein vollständiges Abziehen der abgedichteten Lösung zu gewährleisten, nachdem der innere Ring das Abziehelement gegen den inneren Sitzring festlegt.

2. Behälter und Abziehelement nach Anspruch 1, bei welchen das Abziehelement (25) einen nach außen stehenden Kontrollring (28) in einem Zwischenabschnitt desselben und einen Rohreinsatz (31) aufweist, wobei der Rohreinsatz (31) und der Halseinsatz (30) auf entsprechenden Seiten des Kontrollrings (28) liegen und eine gemeinsame Bohrung (29) aufweisen.

3. Behälter und Abziehelement nach Anspruch 1 oder 2, bei welchen der innere Ring (20) eine Eingrifftoleranz von wenigstens 0,0254 mm (0,001 inch) je Seite in einem vorgewählten Abschnitt zwischen den Endabschnitten des Halses (14) zur Aufnahme des Abziehelements (25,46) in Preßsitz aufweist.

4. Behälter und Abziehelement nach einem der vorangehenden Ansprüche, bei welchen der Behälter (10) einspritzbares Serum, intravenöse Flüssigkeiten oder diagnostische Flüssigkeiten enthält.

5. Verfahren zum Abziehen von Flüssigkeit aus einem Behälter in Verbindung mit einem Abziehelement nach einem der vorangehenden Ansprüche, gekennzeichnet durch die Schritte des Einsetzens des Abziehelements (25,46) in den Behälter (10) durch Einschieben unter Kraftausübung, bis das Ende (38,48) den inneren Sitzring (21) des Behälters kontaktiert, und sodann ein wenigstens teilweises Umkehren des Behälters bis zu einem Punkt, an dem der ganze Inhalt des Behälters in den Halsteil (14) des Behälters fließt, und Abziehen der Flüssigkeit, bis keine weitere Flüssigkeit zum Abziehen verbleibt.

## Revendications

1. Conteneur destiné à contenir une solution scellée et un élément d'extraction pour extraire ladite solution du conteneur, le conteneur (10) ayant un corps (12), une extrémité étant munie d'un joint amovible (11), et un goulot (14), dans lequel le goulot a une ouverture intérieure ayant une section transversale sensiblement uniforme d'une extrémité du goulot à l'autre, et une languette d'arrachement amovible (11) au-delà de la partie formant goulot, caractérisé en ce qu'une collerette interne (20) est prévue pour recevoir l'élément d'extraction (25, 45) dans une relation d'ajustement serré, l'élément d'extraction étant sous la forme d'un tube (25, 45) ayant une pièce d'insertion formant goulot (30, 46) et une rainure annulaire (35) sur la pièce d'insertion formant goulot (30, 46) proportionnée pour un ajustement serré avec la collerette interne (20) du conteneur, et dans lequel un anneau d'appui interne (21) est disposé à l'extrémité du goulot (14) à distance de sa partie ouverte pour mettre en prise de manière étanche l'extrémité (38, 48) de l'élément d'extraction de manière à assurer ainsi une extraction totale de la solution scellée après que la collerette interne a solidement fixé l'élément d'extraction contre l'anneau d'appui interne.

2. Conteneur et élément d'extraction selon la revendication 1, dans lequel l'élément d'extraction (25) possède un anneau de commande s'étendant vers l'extérieur (28) au niveau d'une partie intermédiaire de ce dernier et une pièce d'insertion formant tube (31), la pièce d'insertion formant tube (31) et la pièce d'insertion formant goulot (30) se trouvant sur des côtés respectifs de l'anneau de commande (28) et comportant un alésage commun (29).

3. Conteneur et élément d'extraction selon la revendication 1 ou la revendication 2, dans lequel la collerette interne (20) a une tolérance d'ajustement d'au moins 0,0254 mm (0,001") par côté au niveau d'une partie présélectionnée entre des parties d'extrémité du goulot (14) pour recevoir l'élément d'extraction (25, 46) par ajustement serré.

4. Conteneur et élément d'extraction selon l'une quelconque des revendications précédentes, dans lequel le conteneur (10) contient un sérum injectable, des liquides intraveineux ou des liquides de diagnostic.

5. Procédé d'extraction de fluide à partir d'un conteneur en relation avec un élément d'extraction selon l'une quelconque des revendications précédentes, caractérisé par les étapes d'insertion de l'élément d'extraction (25, 46) dans le conteneur (10) en l'avançant par ajustement serré jusqu'à ce que l'extrémité (38, 48) vienne en contact avec l'anneau d'appui interne (21) du conteneur, et après cela en inversant au moins partiellement le conteneur jusqu'à un point où le contenu tout entier du conteneur va s'écouler vers la partie formant goulot (14) du conteneur, et d'extraction du fluide jusqu'à ce qu'il ne reste plus de fluide à extraire.
